# EUROPEAN PATENT APPLICATION

(11) **EP 3 200 410 A1**
(43) Date of publication of application: **02.08.2017**
(21) Application number: 16305086.7
(22) Date of filing: 28.01.2016
(51) Int. Cl.: H04L 12/863, H04L 12/875, H04L 12/877

(54) **METHOD AND SYSTEM FOR QUEUEING PACKETS IN COMMUNICATION NETWORKS**

(71) Applicant: ALCATEL LUCENT, 92100 Boulogne-Billancourt (FR)
(72) Inventor: TSANG, Ing-Jyh, 2018 Antwerp (BE); OLAZIREGI, Nikolas, 2018 Antwerp (BE); DE SCHEPPER, Koen A.E., 2018 Antwerp (BE)
(74) Representative: D'Halleweyn, Nele Veerle Trees Gertrudis

(57) **Abstract**

A method for queueing packets in a packet-switched network, the packets belonging to a number of packet flows, the packet flows being subject to transfer delay requirements, the method comprising obtaining a packet; identifying a packet flow associated with the obtained packet; obtaining transfer delay information representing transfer delay for the identified packet flow; determining a load indication representing at least one of a filling level and a sojourn time of a first queue of a plurality of queues comprising at least the first and a second queue both configured for buffering packets; and based on the obtained transfer delay information and the determined load indication, selecting a queue from the plurality of queues.

## Description

### Field of Invention

The present invention relates to queueing. Particular embodiments relate to a method for queueing packets in a packet-switched network, a queueing system for queueing packets in a packet-switched network, a network element for queueing packets in a packet-switched network, and a computer program product for queueing packets in a packet-switched network.

### Background

A number of packet-switched networking technologies specify transport delay requirements for part or whole of the transport path over the network. This means that packets should be transferred in less time than a pre-determined time period. A number of packet-switched networking technologies specify stringent transport delay requirements (i.e. transport delay requirements with a short pre-determined time period).

Also, a number of packet-switched networking technologies allow variable bitrates (i.e. the rate at which packets are transferred) rather than constant envelope bitrates, thus potentially leading to different transfer delay requirements for different packets.

Currently known solutions provide a non-blocking traffic path between the source and destination endpoints - in other words, a dedicated traffic path is provided in or alongside the communication network for packets from the source to the destination. While such non-blocking traffic paths can be deployed in some specific cases, they are often not cost-effective and may not even be possible to implement.

### Summary

Embodiments of the present invention aim to improve network performance in communication networks carrying packets that are subject to different transfer delay. Packet flows passing through a common bottleneck may traverse different paths, and specific packet flows may undergo longer physical delays, e.g. propagation, serialization delay, than others. While the end-to-end delay requirements for packets of the same packet flow is the same, each packet may suffer different queueing delay along the path, and thus they might have different remaining delay budgets by the time they arrive in a queue.

Embodiments of the present invention are based *inter alia* on the insight that network performance can be improved using statistical multiplexing in communication networks where packets from multiple sources with different one-way delays are aggregated through one or more queueing systems. In other words, embodiments of the present invention aim to perform queueing in order to absorb traffic bursts. In particular, embodiments of the present invention benefit from the insight that a temporary queue build-up is more disadvantageous for packets that have a relatively longer one-way delay than it is for packets that have a relatively shorter one-way delay. Therefore, embodiments of the invention may aim to trade remaining delay budget of one packet with queuing delay of another packet, in order to satisfy the stringent transport delay requirements for each packet from different packet flows.

According to a first aspect of the present invention there is provided a method for queueing packets in a packet-switched network. The packets (or at least some of the packets) belong to a number of packet flows. The packet flows (or at least some of the packet flows) are subject to transfer delay requirements. The method comprises obtaining a packet. The method also comprises identifying a packet flow associated with the obtained packet. The method also comprises obtaining transfer delay information representing transfer delay for the identified packet flow. The method also comprises determining a load indication representing at least one of a filling level and a sojourn time of a first queue of a plurality of queues comprising at least the first and a second queue both configured for buffering packets. The method also comprises, based on the obtained transfer delay information and the determined load indication, selecting a queue from the plurality of queues.

In this manner, the method allows to improve network performance using statistical multiplexing by selecting one of the plurality of queues, depending on dynamic factors such as the load indication, taking into account the respective packet flow's transfer delay requirement. In a further developed embodiment, the load indication may express the load of the plurality of queues in terms of time, for example based on the longest sojourn time of packets that are buffered and waiting on the first queue, or for example on the number of packets of the same flow in the queue.

In a further developed embodiment, the obtaining of the packet may comprise receiving the packet from an upstream network element. In another further developed embodiment, the method may also comprise buffering the obtained packet in the selected queue of the plurality of queues. In another further developed embodiment, the method may also comprise scheduling buffered packets for dispatch from the plurality of queues.

According to an exemplary embodiment, the packet flow may be identified based on a packet's Ethernet MAC (Medium Access Control) (e.g. source, destination) or VLAN (Virtual Local Area Network) tag, and/or a packet's protocol header tuple (e.g. the packet's source address, destination address, protocol type, and/or network ports).

According to various embodiments of the present invention, the selecting comprises comparing the determined load indication with a decision threshold representing an equivalent filling level and/or sojourn time of the first queue, the decision threshold being based on the obtained transfer delay information. In a further developed embodiment, the load indication and the decision threshold may be separately compared to an independent parameter.

According to various embodiments of the present invention, the selecting comprises selecting the first queue from the plurality of queues, if the load indication is less than the decision threshold; and selecting another queue from the plurality of queues than the first queue, if the load indication is greater than the decision threshold. According to a further developed embodiment, if the load indication is equal to the decision threshold, a default option may be chosen of either the first queue or another queue than the first queue, for example a default option that allows advantageous implementation. Herein, the term "equal" is to be understood as including approximations, e.g. including an approximation to a level that is equivalent to, for example, a per-packet level. Other approximations may also be used, such as an approximation that is based on rounded time values, and the like.

According to various embodiments of the present invention, the first queue is selected only on condition that the load indication is less than a hysteresis threshold representing a lower equivalent filling level and/or sojourn time of the first queue than the decision threshold. In this way, the selection may be more easily reasoned about, especially when the load indication closely approaches the decision threshold. According to a further developed embodiment, the hysteresis threshold may be calculated based on the decision threshold, or based on parameters used to calculate the decision threshold, and may represent an equivalent filling level and/or sojourn time that is sufficiently lower than the decision threshold to improve the stability of the selection. In this way, oscillation in selection of the first queue and other queues may be limited.

According to a further developed embodiment, one or more packet flows, for example the one or more packet flows having the least transfer delay in absolute terms or in relative terms to their respective transfer delay requirements, may by default be directed to a specific queue, for example the second queue. In this way, required computation may be limited for that or those packet flows.

According to various embodiments of the present invention, the method also comprises scheduling packets buffered in the plurality of queues using a weighted or stochastic priority scheme taking into account at least one of the following: a relation between an ingress rate of the plurality of queues and an egress rate of the plurality of queues; a relation between an ingress rate of the first queue of the plurality of queues and an ingress rate of another queue of the plurality of queues than the first queue; and a relation between the filling level and/or sojourn time of the first queue of the plurality of queues and a filling level and/or sojourn time of another queue of the plurality of queues than the first queue.

According to various embodiments of the present invention, the packets are IEEE 802.3 Ethernet packets carrying Common Public Radio Interface data. According to exemplary embodiments of the present invention, the packets are of a packet scheme used to transport data within a restricted time budget.

According to various embodiments of the present invention, the plurality of queues comprises exactly the first and the second queue. In this way, hardware costs for computation can be decreased. In an alternative embodiment, the plurality of queues comprises at least three queues. In this way, packets can be prioritized more precisely.

According to another aspect of the present invention, there is provided a classifier for selecting a queue from a plurality of queues. The plurality of queues comprises at least a first and a second queue configured for buffering packets. The packets (or at least some of the packets) belong to a number of packet flows. The packet flows (or at least some of the packet flows)are subject to transfer delay requirements. The classifier is configured for obtaining a packet. The classifier is also configured for identifying a packet flow associated with the obtained packet. The classifier is also configured for obtaining transfer delay information representing transfer delay for the identified packet flow. The classifier is also configured for determining a load indication representing at least one of a filling level and a sojourn time of the first queue of the plurality of queues. The classifier is also configured for, based on the obtained transfer delay information and the determined load indication, selecting a queue from the plurality of queues.

It will be understood by the skilled person that the features and advantages disclosed hereinabove with respect to various embodiments of the method may also apply, *mutatis mutandis*, to various embodiments of the classifier.

In a further developed embodiment, the classifier is configured for receiving the packet from an upstream network element. In another further developed embodiment, the classifier may be configured for buffering the obtained packet in the selected queue of the plurality of queues.

According to an exemplary embodiment, the classifier may be configured for identifying the packet flow based on a packet's Ethernet MAC (Medium Access Control) (e.g. source, destination) or VLAN (Virtual Local Area Network) tag, and/or a packet's protocol header tuple (e.g. the packet's source address, destination address, protocol type, and/or network ports).

According to various embodiments of the present invention, the classifier is configured for comparing the determined load indication with a decision threshold representing an equivalent filling level and/or sojourn time of the first queue, the decision threshold being based on the obtained transfer delay information. In a further developed embodiment, the classifier may be configured for comparing the load indication and the decision threshold separately to an independent parameter.

According to various embodiments of the present invention, the classifier is configured for selecting the first queue from the plurality of queues, if the load indication is less than the decision threshold; and selecting another queue from the plurality of queues than the first queue, if the load indication is greater than the decision threshold. According to a further developed embodiment, if the load indication is equal to the decision threshold, a default option may be chosen of either the first queue or another queue than the first queue, for example a default option that allows advantageous implementation. Herein, the term "equal" is to be understood as including approximations, e.g. including an approximation to a level that is equivalent to, for example, a per-packet level. Other approximations may also be used, such as an approximation that is based on rounded time values, and the like.

According to various embodiments of the present invention, the classifier is configured for selecting the first queue only on condition that the load indication is less than a hysteresis threshold representing a lower equivalent filling level and/or sojourn time of the first queue than the decision threshold. In this way, the selection may be more easily reasoned about, especially when the load indication closely approaches the decision threshold. According to a further developed embodiment, the classifier may be configured for calculating the hysteresis threshold based on the decision threshold, or based on parameters used to calculate the decision threshold, and in such a way that the hysteresis threshold represents an equivalent filling level and/or sojourn time that is sufficiently lower than the decision threshold to improve the stability of the selection. In this way, oscillation in selection of the first queue and other queues may be limited.

According to a further developed embodiment, one or more packet flows, for example the one or more packet flows having the least transfer delay in absolute terms or in relative terms to their respective transfer delay requirements, may by default be directed to a specific queue, for example the second queue. In this way, required computation may be limited for that or those packet flows.

According to various embodiments of the present invention, the packets are IEEE 802.3 Ethernet packets carrying Common Public Radio Interface data.

According to various embodiments of the present invention, the plurality of queues comprises exactly the first and the second queue. In this way, hardware costs for computation can be decreased. In an alternative embodiment, the plurality of queues comprises at least three queues. In this way, packets can be prioritized more precisely.

According to another aspect of the present invention, there is provided a queueing system for queueing packets in a packet-switched network. The packets (or at least some of the packets) belong to a number of packet flows. The packet flows (or at least some of the packet flows) are subject to transfer delay requirements. The queueing system comprises a plurality of queues comprising at least a first and a second queue both configured for buffering packets. The queueing system also comprises a classifier according to any one of the classifier embodiments described above. The queueing system also comprises a scheduler configured for scheduling packets for dispatch from the plurality of queues.

It will be understood by the skilled person that the features and advantages disclosed hereinabove with respect to various embodiments of the method and various embodiments of the classifier may also apply, *mutatis mutandis*, to various embodiments of the queueing system.

According to various embodiments of the present invention, the scheduler is configured for scheduling packets buffered in the plurality of queues using a weighted or stochastic priority scheme taking into account at least one of the following: a relation between an ingress rate of the plurality of queues and an egress rate of the plurality of queues; a relation between an ingress rate of the first queue of the plurality of queues and an ingress rate of another queue of the plurality of queues than the first queue; and a relation between the filling level and/or sojourn time of the first queue of the plurality of queues and a filling level and/or sojourn time of another queue of the plurality of queues than the first queue.

According to various embodiments of the present invention, the plurality of queues comprises exactly the first and the second queue. In this way, hardware costs for computation can be decreased. In an alternative embodiment, the plurality of queues comprises at least three queues. In this way, packets can be prioritized more precisely.

According to various embodiments of the present invention, the packets are IEEE 802.3 Ethernet packets carrying Common Public Radio Interface data.

According to another aspect of the present invention, there is provided a network element for processing packets in a packet-switched network. The packets (or at least some of the packets) belong to a number of packet flows. The packet flows (or at least some of the packet flows) are subject to transfer delay requirements. The network element comprises at least one queueing system according to any one of the queueing system embodiments described above. The network element also comprises a main classifier configured for selecting at least one of the at least one queueing system to queue an incoming packet of the packets to be processed. The network element also comprises a main scheduler configured for scheduling processed packets from the at least one queueing system.

It will be understood by the skilled person that the features and advantages disclosed hereinabove with respect to various embodiments of the method, the classifier and the queueing system may also apply, *mutatis mutandis*, to various embodiments of the network element.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis*, to embodiments of the computer program product.

According to yet another aspect of the present invention, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis*, to embodiments of the digital storage medium.

According to yet another aspect of the present invention, there is provided a device programmed to perform a method comprising the steps of any one of the methods of the method embodiments described above.

According to yet another aspect of the present invention, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method for queueing packets may also apply, *mutatis mutandis*, to embodiments of the method for downloading.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:
Figure 1 schematically illustrates an embodiment of a queueing system according to the present invention;
Figure 2 schematically illustrates another embodiment of a queueing system according to the present invention, e.g. a further development of the queueing system embodiment shown in Figure 1;
Figure 3 schematically illustrates an embodiment of a network element according to the present invention, e.g. including, in this example, two instances of the queueing system embodiment such as that shown in Figure 1;
Figure 4 schematically illustrates a flowchart of an embodiment of a method according to the present invention;
Figures 5A-5C schematically illustrate flowcharts of other embodiments of a method according to the present invention, e.g. as further developed from the method embodiment shown in Figure 4;
Figures 6A-6C schematically illustrate flowcharts of other embodiments of a method according to the present invention, e.g. as further developed from the method embodiment shown in Figure 4 or from the method embodiments shown in Figures 5A-5C; and
Figures 7A-7D schematically illustrate respective plots for a weight accorded to another queue than a first queue (in this example, a second queue) in a priority weighting scheme used in various embodiments according to the present invention, e.g. in the method embodiment shown in any of the Figures 4-6, or e.g. in the queueing system embodiment shown in any of the Figures 1-2.

### Description of embodiments

A number of packet-switched networking technologies specify transport delay requirements for part or whole of the transport path over the network. This means that packets should be transferred in less time than a pre-determined time period. A number of packet-switched networking technologies specify stringent transport delay requirements (i.e. transport delay requirements with a short or very short pre-determined time period), requiring queueing in order to absorb burst, and improved mechanisms to trade remaining delay budget of one packet with queuing delay of another packet, in order to satisfy these stringent transport delay requirements for each packet from different packet flows.

For example, Common Public Radio Interface over Ethernet (CPRIoE) - wherein Ethernet (IEEE 802.3 standard) packets carry Common Public Radio Interface (CPRI) data, for example using Ethernet header fields or Virtual Local Area Network (VLAN) tags - demands a maximum transport delay of 100-250 µs for packets transported between the Remote Radio Head (RRH) and the Base Band Unit (BBU). The Remote Radio Head may alternatively be known as Remote Radio Unit (RRU) or Radio Equipment (RE). The Base Band Unit may alternatively be known as Radio Equipment Control (REC) or Radio Equipment & Network Control. It will be understood by the skilled person that such transport delay requirements can be short or even very short pre-determined time periods, such that aggregation without a strategy for improved queueing of packets - using statistical multiplexing - may prove disadvantageous. It will further be understood by the skilled person that the above CPRIoE example requirements are presented only as an example and are not intended to limit application of embodiments of the present invention in any way.

Currently understood techniques could be applied in order to provide a non-blocking traffic path between the source and destination endpoints - in other words, a dedicated traffic path is provided for packets from the source to the destination. While such non-blocking traffic paths can be deployed in some specific cases, they are often not cost-effective and may not even be possible to implement.

In communication networks using e.g. CPRIoE, packet flows are sent between RRH and BBU. Unlike front-haul based configurations, which assume constant bit rate (i.e. the number of bits that are conveyed or processed per unit of time is constant over time), mid-haul (i.e. the network between base station sites - especially when one site is a small cell site) based configurations foresee variable bit rate (i.e. the number of bits that are conveyed or processed per unit of time varies over time and between packet flows) packet flows between the RRH and BBU. When multiple packet flows carrying CPRIoE data (i.e. Ethernet frames carrying CPRIO data) from sources with different transfer delay, or one-way delay (OWD), are aggregated through a queue, or more generally through a queueing system, in particular a queueing system of a network element, a temporary queue build-up will be more detrimental to packet flows that have a longer OWD than to packet flows that have shorter OWD up to this specific queue.

It is therefore advantageous to prioritize packet flows that have longer OWD, thus less time budget available/remaining to be delivered to the destination. Traditional Differentiated Services (DiffServ) do not solve the problem, because all the CPRIoE packet flows have the same priority in terms of DiffServ, and are therefore aggregated on the same DiffServ high-priority queue.

Although elsewhere in this specification reference is made in particular to CPRIoE, for ease of understanding, it will be understood by the skilled person that embodiments of the present invention are suitable for other types of communication technologies. The embodiments are in particular not limited to the specific case of CPRIoE, but may also be applied for midhaul (a.k.a. next generation fronthaul) variations.

Embodiments of the present invention allow the network to achieve the demanding specification of the traffic flows described above, while not requiring a complete end-to-end non-blocking network, so that statistical multiplexing can be used in order to scale and rationalize the performance of a network.

It is noted that use in this specification of the term 'queue' does not exclude the term 'buffer' or the like, does not require either a hardware or a software implementation (but could be implemented using either hardware, software, or a combination of both), nor does it require that there is either a fixed size limit or a mutable size limit.

It is further noted that use in this specification of the term 'packet' may refer to a formatted unit of data that can be transferred from one entity to another entity in a communication network, in particular a packet-switched communication network. As an example, in IEEE 802.3 Ethernet networks, the unit of data is usually called a 'frame' - the term 'packet' in this specification need not be construed as limited to Ethernet frames.

It is further noted that use in this specification of the term 'packet-switched network' may be understood to refer to a network in which transmitted data is grouped into suitably sized blocks, called packets, which are transmitted via a medium that may be shared by multiple simultaneous communication sessions. Ethernet is an example of a packet-switched network. Ethernet, or other types of packet-switched networks, may carry other types of data, e.g. 5G data.

It is further noted that use in this specification of the term 'packet flow' may refer to a sequence of packets from a particular source to a particular destination. A packet flow can for example be thought of as an artificial logical equivalent to a call or connection.

It is further noted that use in this specification of the term 'transfer delay' (or packet transfer delay) may refer to the one-way delay or end-to-end delay of a packet, which is the time taken for the packet to be transmitted across a packet-switched network from its source to its destination (or, depending on the point of interest, to an intermediate destination). Example requirements for CPRIoE transfer delays are 100-250 µs, between remote radio heads and baseband units.

It is further noted that use in this specification of the term 'filling level' of a queue may refer to a measure for the number of packets in the queue. The measure may be expressed as a number of packets that are currently present and/or that have been present for some pre-determined time in the queue, and/or as a sojourn time for one or more packets that are currently present and/or that have been present for some pre-determined time in the queue. The filling level and/or sojourn time may be expressed in absolute terms (e.g. as the actual number of packets or the actual time that packets have been in the queue) or in relative terms (e.g. as a proportion of the queue's total buffering space).

It is further noted that use in this specification of the term 'scheduling' may refer - in the context of queueing systems -to the act of determining when to dispatch a particular item. Also, use of the term 'dispatching' may refer to transmitting a packet further to its destination, and/or may even comprise dropping the packet if certain conditions are or are not met - e.g. exceeding the permissible transfer delay budget of a packet.
As discussed above, embodiments of the present invention allow to prioritize packet flows with different one-way delay (OWD), or transfer delay, up to a queue, or more generally up to a queueing element. Therefore, they allow to alleviate current market practice of dedicating a network for cellular traffic transport in the access and aggregation domains (as defined in such standards as ITU-T (International Telecommunication Union - Telecommunication Standardization Sector), BBF (Broadband Forum), and the like). In doing so costs may be saved, by e.g. investment relaxation and operational simplification.

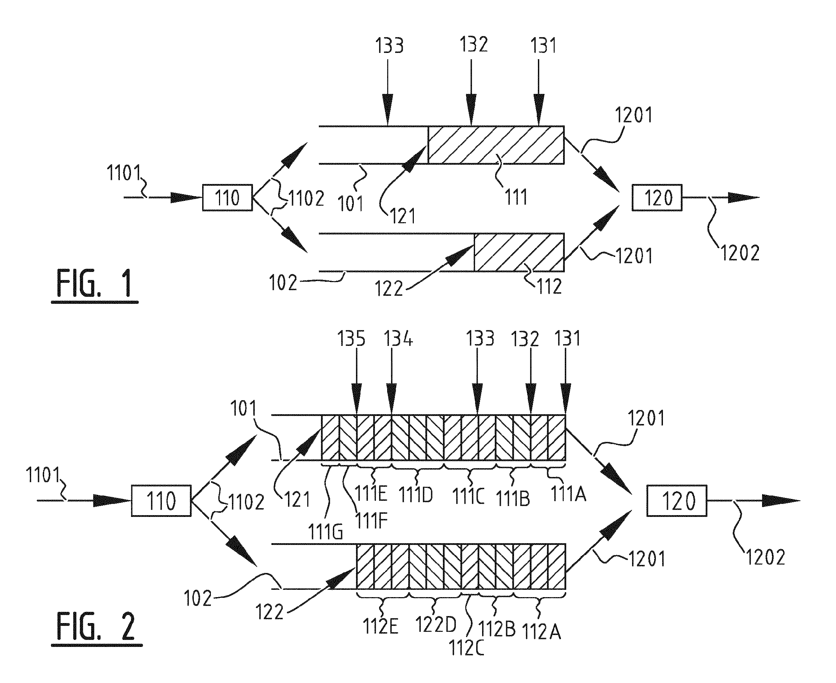

Figure 1 schematically illustrates an embodiment of a queueing system according to the present invention. The illustrated embodiment of the queueing system comprises a classifier 110; a plurality of queues comprising a first or "standard" queue 101 and a second or "fast path" queue 102; and a scheduler 120 configured for scheduling 1201 buffered packets for dispatch 1202 from the plurality of queues 101, 102. The queueing system embodiment is suitable for use in a communication network carrying traffic including packets, at least some of which belong to a number of packet flows (typically, a number of packets will together form part of one packet flow), especially traffic for which at least some of the packet flows are subject to transfer delay requirements.

The classifier 110 shown in this exemplary embodiment may be configured for identifying a packet flow associated with an obtained packet.

In other words, the classifier 110 may be configured to operate based on packet flow identification and on transfer delay information (or also: one-way delay, OWD) of each packet flow i or *fᵢ*. The classifier 110 may be configured to use a filter to identify *fᵢ*, which can be done by analysing e.g. a VLAN (Virtual Local Area Network) tag of the packet or a protocol header tuple of the packet. As packets belonging to a packet flow *fᵢ* arrive 1101 or are otherwise obtained, the classifier 110 may be configured to identify the packet flow by a filter rule. It may be configured to create a list of packet flows. It may also be configured to measure the rate of each incoming packet flow. For example, a mechanism may be provided to continuously update the packet rate of each packet flow, denoted as *Frᵢ*, by counting the number of packets for each packet flow during a pre-determined sampling period *Tₛ*. In practice, it is not required to determine the rate per packet flow, if the total rate served by each of the "standard" queue 101 and the "fast path" queue 102 is known.

In a specific embodiment, the classifier 110 may be restricted to operate on traffic serviced by a particular queue, which may likely be distinguished by the DiffServ code point (DSCP). This may in particular be the case for a communication network in which Triple Play traffic is carried, that is, prioritized Voice and Video traffic as well as best-effort data (optionally including a distinction between Enterprise data and other data). Further, in a managed model, the classifier 110 may be configured to create the packet flow list *a priori* at provisioning, e.g. by creating a list of packet flows identified by VLAN tags associated to that particular queue distinguished by the DSCP.
The classifier 110 shown in this exemplary embodiment may also be configured for obtaining transfer delay information representing transfer delay for the identified packet flow.

In other words, the classifier 110 may be configured to obtain the OWD from the source endpoint of each packet flow i, defined as the packet delay *Pdᵢ.* In an IP-aware equipment, a practical method to determine *Pdᵢ* may be to use the "ping" command. A routine may ping the source of packet flow i, for a time period T milliseconds ("ping -w *T*") or *n* number of times ("ping -*n* <flow.source.add>"). In either case, the classifier 110 may measure an average round trip time *RTTᵢ* for *fᵢ*, and the classifier 110 may create an array *Pd[i]= RTTᵢ*/2, containing the OWD list of each *fᵢ*. With Ethernet-based equipment, a network time protocol (NTP), such as IEEE 1588, may be used to determine *Pd[i].* This may be more precise and more generic than using the "ping" command. Once *Pdᵢ* are determined, they may preferably be rescaled by the longest delay *Pdₘₐₓ = max*(*Pd₀*, *Pd₁, ..., Pdₙ*). In other words, the classifier 110 may set the *Pdₘₐₓ* as the reference packet flow delay. This may advantageously make the classifying easier to reason about.

The classifier 110 may be configured to select a queue from the plurality of queues 101, 102, based on the obtained transfer delay information (e.g. a difference in delays *Pddᵢ = Pdₘₐₓ*-*Pdᵢ)* and on a load indication representing a filling level and/or sojourn time of the first (or "standard") queue 101. In other words, these parameters may be used by the classifier 110 in order to determine at which queue size depth (i.e. at which filling level of the first queue 101) or sojourn time a given packet flow *fᵢ* will be prioritized and be directed 1102 on another queue than the first queue 101, e.g. on the second (or "fast path") queue 102.

For example, let *Erₘ* be the maximum egress rate of the queue, and *Plᵢ* be the average byte length of a packet of packet flow *fᵢ*. The time required to transmit a packet of packet flow i at egress rate *Erₘ* is then given for this example by *Ptᵢ = Plᵢ* * *8*/*Erₘ.* The factor of '8' used in this example may be included to correct for bit-byte equivalence, but other ways of expressing this parameter may also be considered.

The classifier 110 may also be configured for determining a load indication representing a at least one of a filling level and a sojourn time (i.e. a filling level, or a sojourn time, or both a filling level and a sojourn time) of the first queue 101 of the plurality of queues 101, 102. The classifier 110 may also be configured for, based on the obtained transfer delay information and the determined load indication, selecting a queue from the plurality of queues 101, 102.

In a general embodiment, the classifier 110 may select the queue directly based on the obtained transfer delay information and determined load indication. In a more specific embodiment, the classifier 110 may select the queue based on a decision threshold (e.g. one of decision thresholds 131-133) representing an equivalent filling level and/or sojourn time of the first queue 101, the decision threshold being based on the obtained transfer delay information. For example, the queue size depth at which a packet flow *fᵢ* is triggered to be prioritized (i.e. a decision threshold for that packet flow) may be given by the following equation for the corresponding decision threshold: *Qsᵢ* = *Pddᵢ*/*Ptᵢ.*

The actual measured "instantaneous" queue filling level, *Qf = Qf_{std(121)}* + *Qf*_{*fp* (122)} may preferably be monitored over the entire plurality of queues, i.e. including both the first or "standard" queue 101 and the second or "fast path" queue 102 (and optionally one or more additional queues if the plurality of queues comprises at least three queues), especially if it is calculated over the maximum egress rate *Erₘ*.

In a particular embodiment, the decision threshold Q*sᵢ* corresponding with a particular packet flow *fi* may be defined based on the difference in transfer delays *Pddᵢ = Pdₘₐₓ - Pdᵢ*, which assumes just the transfer delays (i.e. the OWD) of the packet flows up to a present queue location. In a further developed embodiment, if the maximum end-to-end OWD budget (i.e. the remaining available transfer delay in view of the transfer delay requirements) per packet flow, *Fdᵢ,* is known, this could also be taken into account in the calculation of the decision threshold *Qsᵢ.* For example, the difference in transfer delays may alternatively be defined as *Pddᵢ* = *Fdᵢ* - (*Pdᵢ* + *Pdcᵢ*)*. Pdcᵢ* may then be an "arbitrary" packet transfer delay constant, for packet flow i, defined as the time that packet flow may wait in the queueing system. In that case, the relationship *Fdᵢ* > (*Pdᵢ* + *Pdcᵢ*) may preferably hold.

Figure 2 schematically illustrates another embodiment of a queueing system according to the present invention, e.g. a further development of the queueing system embodiment shown in Figure 1. Elements of the queueing system embodiment shown in Figure 2 corresponding to elements of the queueing system embodiment shown in Figure 1 function analogously and will thus not be described again.

Figure 2 shows in particular that the plurality of queues 101, 102 are configured to buffer packets, which is indicated by the discrete divisions of the respective queues 101, 102. Further, Figure 2 shows a number of different groups of packets 111A-111G and 112A-112D. Some of these different groups of packet may belong to the same packet flows, e.g. groups 111B, 111E and 111G may belong to the same packet flow, and group 112A and group 112D may belong to the same packet flow. It will be understood by the skilled person that these groups are intended as an illustrative example only and that alternatives may be contemplated. Figure 2 further shows a number of decision thresholds 131-135 corresponding to an equal number of packet flows. It will be understood that, in certain embodiments, the respective load indications representing queue filling levels 121 and 122 or sojourn times may be compared to the decision thresholds 131-135. In the embodiment using sojourn time (i.e. the waiting time that packets have been in the queue), sojourn time of each queue 121 and 122 may be compared with the decision thresholds 131-135 corresponding to different sojourn times.

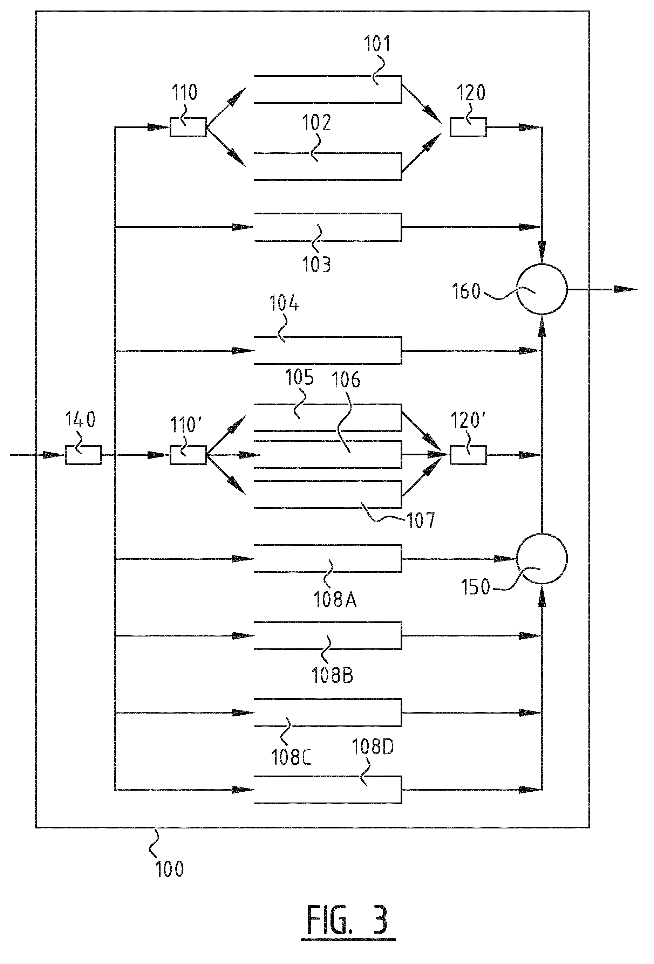

Figure 3 schematically illustrates an embodiment of a network element 100 according to the present invention, e.g. including, in this example, two instances of a queueing system embodiment such as that shown in Figure 1. In particular, the network element 100 is suitable for processing packets in a packet-switched network, e.g. a communication network such as those described hereinabove. Further, the network element is shown to comprise a main classifier 140, which is configured for selecting at least one of the at least one queueing system to queue an incoming packet of the packets to be processed. In the particular illustrated embodiment, a first queueing system comprises classifier 110, two queues 101 and 102, and scheduler 120; and a second queueing system comprises classifier 110', three queues 105, 106 and 107, and scheduler 120'. Classifier 110' and scheduler 120' preferably operate analogously to classifier 110 and scheduler 120 respectively. Further, network element 100 also comprises a number of separate queues 103, 104, and 108A-108D, which may be fed by the main classifier 140. These separate queues may also be termed 'queueing systems', in that they constitute alternatives to the first and second queueing system that are shown. The network element 100 also comprise a main scheduler 160, which is configured for scheduling processed packets from the at least one queueing system. In the example shown here, packets buffered in the queues 108A-108D may first be scheduled by a secondary scheduler 150, for example a weighted fair queueing scheduler, before being provided to the main scheduler 160. Preferably, the main scheduler 160 may be a strict priority scheduler, especially if the network element 100 is configured to carry Triple Play traffic with DSCP distinction, in that queues 108A-108D may carry best effort traffic and the other queueing systems may carry prioritized traffic.

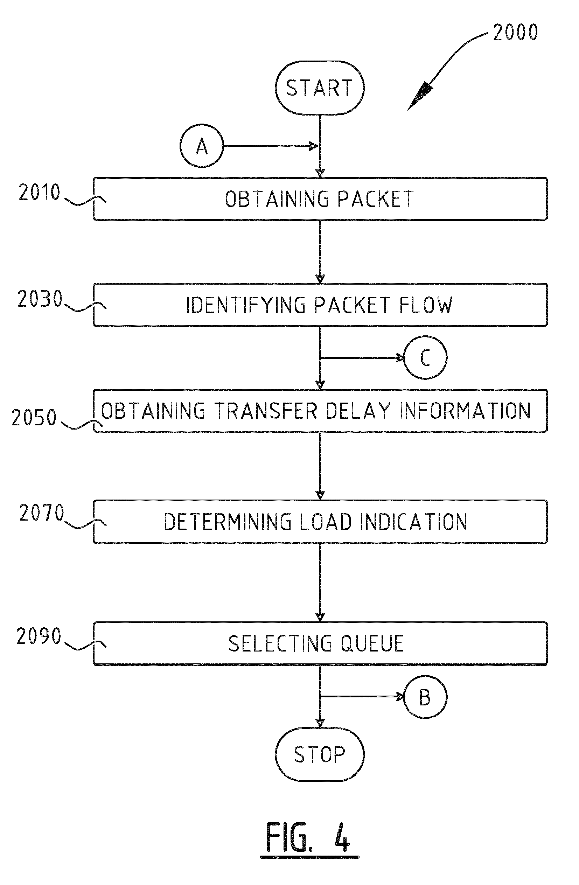

Figure 4 schematically illustrates a flowchart of an embodiment of a method 2000 according to the present invention. The illustrated method embodiment 2000 is suitable for queueing packets in a packet-switched network. The packets - or at least some of the packets - belong to a number of packet flows. The packet flows - or at least some of the packet flows - are subject to transfer delay requirements. The method comprises obtaining 2010 a packet. The method also comprises identifying 2030 a packet flow associated with the obtained packet. The method also comprises obtaining 2050 transfer delay information representing transfer delay for the identified packet flow. The method also comprises determining 2070 a load indication representing at least one of a filling level and a sojourn time of a first queue of a plurality of queues comprising at least the first and a second queue both configured for buffering packets. The method also comprises, based on the obtained transfer delay information and the determined load indication, selecting 2090 a queue from the plurality of queues.

It will be understood that for the method embodiment 2000 shown in Figure 4 analogous features and advantages may be contemplated to the features and advantages discussed hereinabove with reference to Figures 1-3.

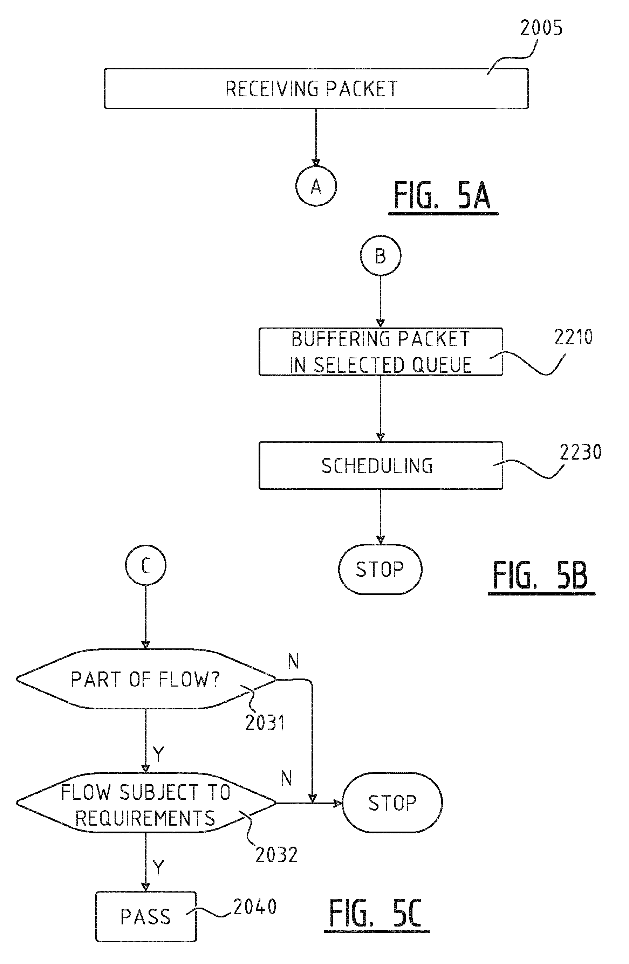

Figures 5A-5C schematically illustrate flowcharts of other embodiments of a method according to the present invention, e.g. as further developed from the method embodiment shown in Figure 4.

Figure 5A schematically illustrates that the obtaining 2010 of the packet may optionally comprise receiving the packet 2005, from a source upstream.

Figure 5B schematically illustrates that, in particular after the queue is selected 2090, the method embodiment may optionally comprise buffering 2210 the packet in the selected queue, and preferably also scheduling 2230 buffered packets (including the packet buffered in operation 2210) from the plurality of queues.

Figure 5C schematically illustrates an optional further development of various embodiments according to the present invention, wherein it may be determined 2031 whether or not the obtained 2010 packet forms part of a packet flow at all, and/or wherein it may be determined 2031 whether or not the identified packet flow is at all subject to transfer delay requirements. If either of these operations indicate 'no', then it may advantageously be decided to halt - if both indicate 'yes', then the method embodiment may continue (indicated in this example with a 'pass' operation 2040).

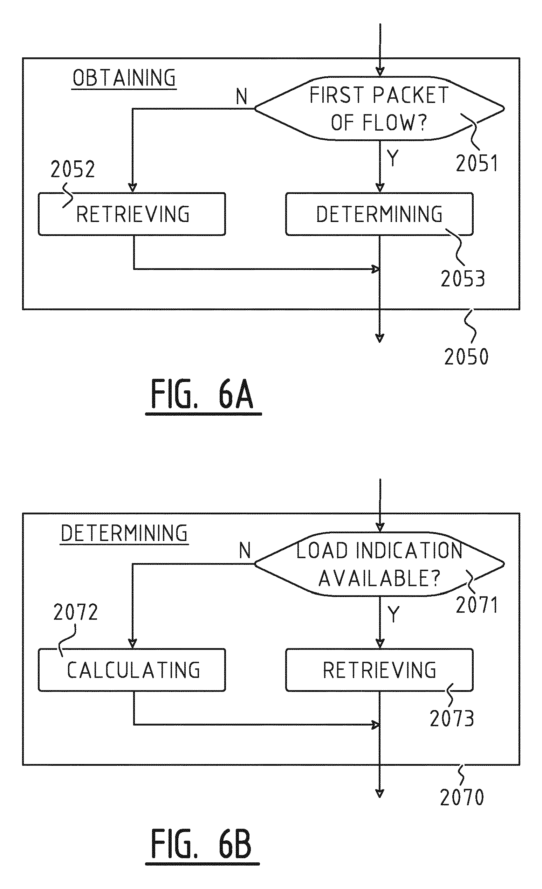

Figures 6A-6C schematically illustrate flowcharts of other embodiments of a method according to the present invention, e.g. as further developed from the method embodiment shown in Figure 4 or from the method embodiments shown in Figures 5A-5C.

Figure 6A schematically illustrates that the operation of the obtaining 2050 of the transfer delay information may optionally comprise determining 2051 whether or not the obtained 2010 packet is the first packet of a given packet flow (e.g. based on a VLAN tag of the packet or on a protocol header tuple of the packet). If so, then, in operation 2053, transfer delay information relating to the packet flow associated with the obtained 2010 packet may be determined (and preferably also be stored for later retrieval). If not, then, in operation 2052, assuming that valid transfer delay information for the packet flow associated with the obtained 2010 packet is available, that information may be retrieved 2052.

Figure 6B schematically illustrates that the operation of the determining 2070 of the load indication may optionally comprise determining 2071 whether or not a valid load indication is available. This is an optional further development for various embodiments of the method according to the present invention, and is advantageously applicable it the load of the plurality of queues either is slow to change, or remains equal or approximately equal (e.g. equal up to a measure of 1 packet) because, if one or more packets that are dispatched are offset by one or more packets that arrive, the load may remain equal or approximately equal. If operation 2071 indicates 'yes', the load indication may be retrieved 2073. Else, the load indication may be calculated 2072 (e.g. as described hereinabove with reference to Figures 1-3), and may preferably also be stored for later retrieval.

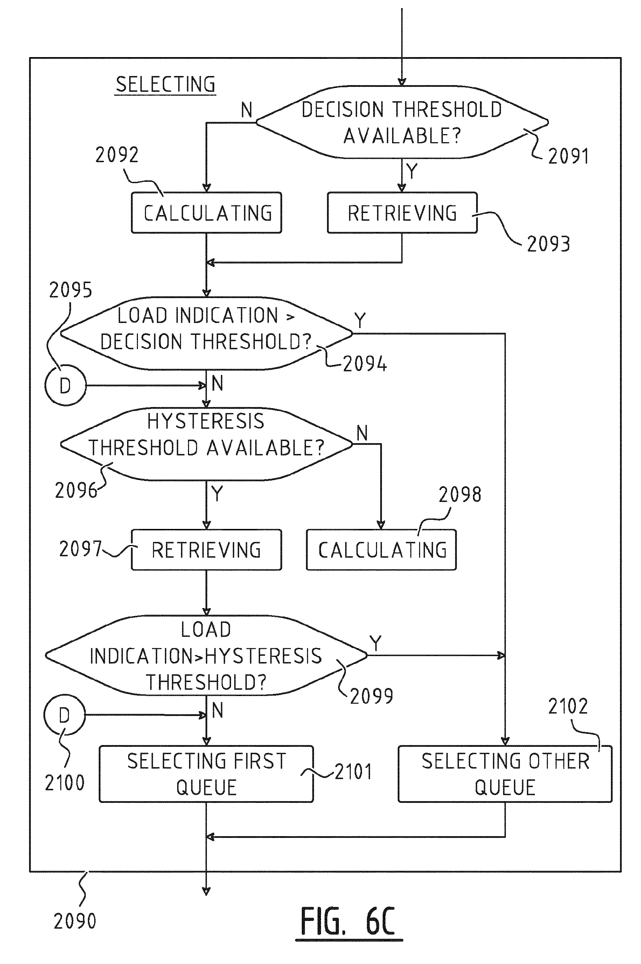

Figure 6C schematically illustrates that the operation of the selecting 2090 may optionally comprise determining 2091 whether or not a valid decision threshold (i.e. a decision threshold that is associated with the packet flow associated with the obtained 2010 packet) is already available. If so, the decision threshold may be retrieved 2093; else, it may be calculated 2092 (e.g. as described hereinabove with reference to Figures 1-3) and may preferably also be stored for later retrieval. Further, the operation of the selecting 2090 may optionally comprise comparing 2094 the load indication with the decision threshold (i.e. the decision threshold associated with the packet flow associated with the obtained 2010 packet). In an example embodiment, if the load indication is greater than the decision threshold (in other words, if a measure for the filling level and/or sojourn time of at least the first queue of the plurality of queues exceeds the decision threshold - i.e. if there are more packets 111 buffered in queue 101 than the equivalent number of packets of the corresponding decision threshold - or the sojourn time of the queue 101 elapses the sojourn time of the corresponding decision threshold of packet 111), another queue than the first queue 101 of the plurality of queues 101, 102 may be selected 2101 (in a particular embodiment, the second queue 102 may be selected). Else, the first queue 101 may be selected 2101 (for example as indicated in the flowchart by following the flow through indications 2095 and 2100).

Optionally, the method embodiment 2000 may also comprise selecting 2101 the first queue only on condition 2099 that the load indication is less than a hysteresis threshold representing a lower equivalent filling level and/or sojourn time of the first queue 101 than the decision threshold - particularly when switching back from a selection of another queue than the first queue 101. To that end, it may optionally be determined 2096 whether or not such a hysteresis threshold is already available. If so, it may be retrieved 2097; if not, it may be calculated 2098 (e.g. as described hereinabove with reference to Figures 1-3) and preferably may also be stored for later retrieval. For example, the hysteresis threshold may be calculated based on the decision threshold, or based on parameters used to calculate the decision threshold, and may represent an equivalent filling level and/or sojourn time that is sufficiently lower than the decision threshold to improve the stability of the selection 2090, specifically when the load indication is decreasing below the decision threshold for a particular packet flow.

As packet flows are classified 1102 (i.e. allocated to a selected queue), as described hereinabove, by the classifier 110 to the first or "standard" 101 queue, or to the second or "fast path" 102 queue (or to other queues if the plurality of queues comprises three or more queues), the scheduler 120 may be configured for scheduling 1201 packets buffered in the plurality of queues 101, 102 using a weighted or stochastic priority scheme. In other words, the scheduler 120 may be configured to control the time each of the queues of the plurality of queues 101, 102 will be served 1201. In a way, the scheduler 120 thus is configured to control the egress rate of each of the queues of the plurality of queues 101, 102. The maximum egress rate of the plurality of queues 101, 102 is denoted by *Erₘ. Irₜ =* ∑*ᵢ Frᵢ* may denote the sum of the ingress rates of all the packet flows. If *Erₘ* ≤ *Irₜ*, a queue build-up may occur, in which case the scheduler 120 may be configured to give priority to the second or "fast path" queue 102, while not completely choking the first or "standard" queue 101.

According to various embodiments of the present invention, the scheduler 120 may be configured to schedule 1201 the packets using a weighted or stochastic priority scheme that takes into account at least one of the following: a relation between an ingress rate (*Irₜ*) of the plurality of queues and an egress rate (*Erₘ*) of the plurality of queues; a relation between an ingress rate (*Ir_{std}*) of the first queue 101 of the plurality of queues and an ingress rate (*Ir_{fp}*) of another queue (e.g. second queue 102) of the plurality of queues than the first queue 101; and a relation between the filling level (*Qf_{std}*) or sojourn time of the first queue of the plurality of queues and a filling level (*Qf_{fp}*) or sojourn time of another queue (e.g. second queue 102) of the plurality of queues than the first queue 101.

In a number of embodiments, the time slice or quantum used by the scheduler 120 is limited by how low the hardware allows. The total transport delay budget may give an indication of how short the quantum should be (i.e. how fast the hardware should be) for the system to be optimally useful.

Below, an example mathematical approach for configuring the classifier 110 in accordance with the above will be described. Where specific reference is made to exactly two queues, it will be understood by the skilled person that the following could also be applied, *mutatis mutandis*, to three or more queues.

Let *Drₜ*, *= Irₜ* - *Erₘ* be the total deficit rate.

If *Drₜ* < 0 the queueing system may be considered operate in an equivalent way to a single queue, because there is no queue build-up on the "standard" queue 101. Therefore, the classifier 110 may be configured to not classify 1201 any packet flow to the second or "fast path" queue 102. In a practical embodiment, the classifier 110 may be configured to classify 1201 the packet flow with the longest OWD (i.e. the greatest value for the transfer delay information) by default to the second or "fast path" queue 102 (or more generally to another queue than the first queue 101 of the plurality of queues).

If *Drₜ* ≥ 0, there is a queue build-up. The classifier 110 may be configured to, depending on the queue build-up, or in other words, based on the load indication as described hereinabove and on the transfer delay information as described hereinabove, prioritize packet flow *fᵢ* to the second or "fast path" queue 102. When *Drₜ* = 0 is reached (or is very closely approximated, depending on hardware representation of numbers), the packet flow with the longest OWD (i.e. the packet flow whose transfer delay information has the greatest value) will be classified 1201 by the classifier 110 to the second or "fast path" queue 102, since *Qsᵢ* = 0 (assuming that the optional operation has been performed of rescaling the packet transfer delays, as described hereinabove), for this packet flow. Alternatively this packet flow can by default be classified 1201 by the classifier 110 into the "fast path" queue 102, as described hereinabove. If the packet delay values (i.e. the transfer delay information) have been rescaled based on the maximum packet delay, the classifier 110 may be configured to ignore the decision threshold *Qsᵢ* = 0, corresponding to this packet flow. As the first or "standard" queue 101 continues to build up with more packets 111, the classifier 110 may select, based on the load indication representing the equivalent filling level 121or sojourn time of the first queue 101 and the respective decision thresholds *Qs*_{*i* 131-135}, at which point each packet flow i will be classified 1102 to another queue than the first queue 101, in this case the second or "fast path" queue 102, by selecting that queue.

When the queue is growing, the decision threshold *Qsᵢ for* a given packet flow determines, i.e. marks, the moment when that packet flow i is switched from the first or "standard" queue 102 to another queue, such as the second or "fast path" queue 102.

When the queue is draining the same decision threshold *Qsᵢ* can be used as marking point to switch back from the other queue (here: the second or "fast path" queue 102) to the first or "standard" queue 101. However, in order to avoid too much switch oscillation another point, namely a hysteresis threshold defined as *Qsᵢ* - δ*Qsᵢ*, can be used for the switch-back, where δ*Qsᵢ* is a small value, such that the hysteresis threshold represents a lower equivalent filling level and/or sojourn time than the decision threshold *Qsᵢ*. This induces hysteresis, which improves the stability of the system, creating less oscillation in switching back and forth between the "standard" 101 and "fast path" 102 queues, and makes the operation easier to reason about.

In various embodiments of the present invention, the scheduler 120 may in other words be configured in accordance with the following mathematical considerations.

Let *Ir_{fp}*,=∑ₖ *Frₖ*, which is the sum of the rates of the packet flows assigned to the second or "fast path" queue 102.

Let *Ir_{std}*,=∑ₕ *Frₕ*, which is the sum of the rates of the packet flows assigned to the first or "standard" queue 101.

The total ingress rate is then: *Irₜ*,= *Ir_{fp}* + *Ir_{std}.*

Let the scheduler weight to serve the second or "fast path" queue 102 be *Ew_{fp}* = (*Erₘ*/*Irₜ*)^(*Ir_{std}*/(*Ir_{fp}*)^{θ}), where θ = *Qf_{fp}* / *Qf_{std}*. These parameters are further defined above *casu quo* below. In case there are exactly two queues (namely the first or "standard" queue 101 and the second or "fast path" queue 102), the weight to serve the first or "standard" queue 101 is then *Ew_{std}* = 1 - *Ew_{fp}*. Embodiments of the present invention may strive for prioritizing overall the second or "fast path" queue 102 proportionally to the packet flow rates and queue filling depth 121, 122 in both queues 101, 102:

Denote as deficiency factor the following: *DF = Erₘ* / *Irₜ:*
If *Erₘ* /*Irₜ* > 1, then there is no queue build-up, as the egress rate is higher than the total ingress packet flows rate. In other words, one of the other queues, for example the second or "fast path" queue 102 may be left unused. Alternatively, it may by default be used for the packet flow with the longest OWD (thus with the least remaining transfer delay budget).

If *Erₘ* /*Irₜ* = 1, egress rate is the same as total ingress packet flows. The packet flow with longest OWD may be classified to the other queue, for example the second or "fast path" queue 102, depending on marker *Qsᵢ* = 0 being used, as described hereinabove.

If *Erₘ* /*Irₜ* < 1, there is queue build-up. This ratio denotes the deficiency factor in which the maximum egress rate is lacking with respect to the total ingress rate of packet flows towards the queueing system.

Factor *Ir_{std}*/ (*Ir_{fp}*)^{θ}, i.e. the ratio between the packet flows in the first or "standard" queue 101 and the second or "fast path" queue 102. However, *Ir_{fp}* may be made exponential to θ, as will be described below. This may be done to correct that factor, according to the filling of the second or "fast path" queue 102 and the first or "standard" queue 102, as described in the following.

If *Ir_{std}*/(*Ir_{fp}*)⁰ > 1, the packet flow rate demand on the first or "standard" queue 101 is higher than over the second or "fast path" queue 102.

If *Ir_{std}*/(*Ir_{fp}*)^{θ} *=* 1, the rate demand on the first or "standard" queue 101 is the same as on the second or "fast path" queue 102.

If *Ir_{std}*/(*Ir_{fp}*)^{θ} < 1, the total packet flow demand on the second or "fast path" queue 102 is higher than on the first or "standard" queue 101.

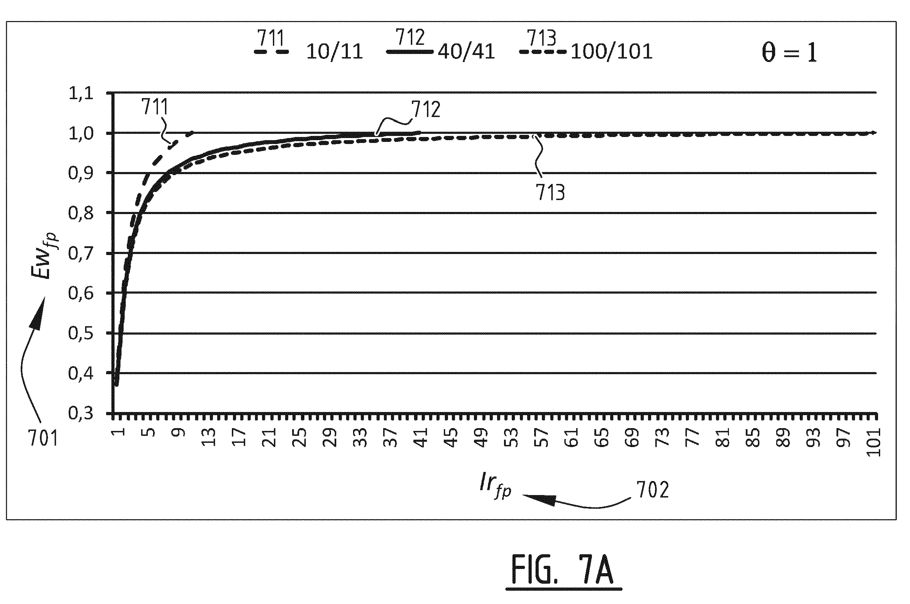

Exponent θ = *Qf_{fp} l Qf_{std}*, i.e. the ratio of queue filling depths 121, 122 of the second or "fast path" queue 102 and the first or "standard" queue 101. This exponent may be included in order to regularize the scheduling curve between those two queues, as described in the following and as illustrated with reference to Figures 7A-7D.

If *Qf_{fp}* / *Qf_{std} =* 0, there is no (or so little as to be safely ignored) filling in the second or "fast path" queue 102, switching can be made less aggressive towards the first or "fast path" queue 101.

If *Qf_{fp}* / *Qf_{std} <* 1, preferably the second or "fast path" queue 102 should have scheduling opportunity (i.e. should be prioritized with respect to the first or "standard" queue 101), but the lower the ratio the less aggressive is the switching towards the second or "fast path" queue 102.

If *Qf_{fp}* / *Qf_{std}* ≥ 1, if both queues 101, 102 have the same filling depths 121, 122, or if second or "fast path" queue 102 has a higher filling level 122 or sojourn time than the filling level 121 or sojourn time of first or "standard" 101, the scheduler 120 may be configured to favour the second or "fast path" queue 102.

Figures 7A-7D schematically illustrate respective plots for a weight accorded to another queue than a first queue 101 (in this example, a second queue 102) in a priority weighting scheme used in various embodiments according to the present invention, e.g. in the method embodiment shown in any of the Figures 4-6, or e.g. in the queueing system embodiment shown in any of the Figures 1-2 (or one or both of those shown included in Figure 3).

The plots shown in Figures 7A-7D illustrate how the scheduler 120 may be configured to serve the other queue of the plurality of queues, for example the second or "fast path" queue 102, according to a priority weight for that queue *Ew_{fp}*, which is shown on the vertical axis 701, in function of the ingress rate of the second or "fast path" queue 102, namely *Ir_{fp}*, which is shown on the horizontal axis 702. It can be seen from the plots that these curves strive to prioritize the "fast path" queue 102 while not starving the "standard" queue 102, and while maintaining a proportional scheduling for both queues. It will be understood by the skilled person that the values and curves shown in these figures serve as an illustrative example only, and are not intended to exclude other values or curves.

In Figure 7A, the parameter θ, as described above, is set as θ = 1. In Figure 4, curve 711 shows a plot from 10:1 to 1:10 packet flow ratios variation between the "standard" and "fast path" queue, with a deficiency factor (as defined hereinabove) of 10/11. In the case of a ratio of 10:1 the second or "fast path" queue 102 will be scheduled 1201 by the scheduler 120 at 38,55% with the first or "standard" queue 101 being scheduled 1201 by the scheduler 120 at 61,45% of the time. Curve 712 assumes packet flow ratios from 40:1 to 1:40 and a deficiency factor of 40/41, yielding a scheduling of 37,24% for the second or "fast path" queue 102 and 62,76% for the first or "standard" queue 101 in the case of 40:1. Curve 713 assumes 100:1 to 1:100 packet flow ratios and a 100/101 deficiency factor, yielding a scheduling of 36,97% for the second or "fast path" queue 102 and 63,03% for the first or "standard" queue 101, in the case of 100:1.

As the ratio of packet flows increases at the second or "fast path" queue 102, switching from the first or "standard" queue 102, the scheduler 120 may be configured to rapidly give more scheduling time, for example until it reaches 1, i.e. full scheduling for the second or "fast path" queue 102.

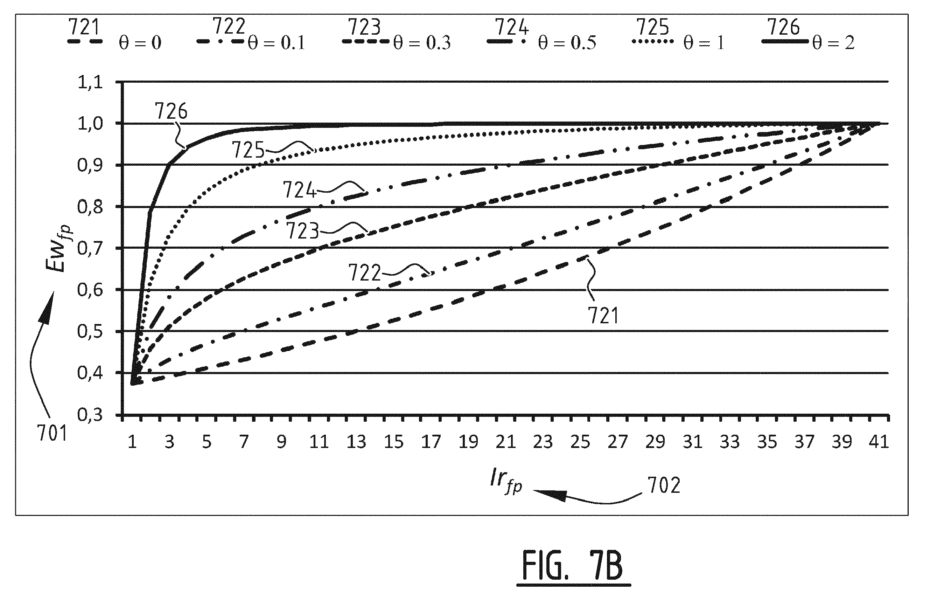

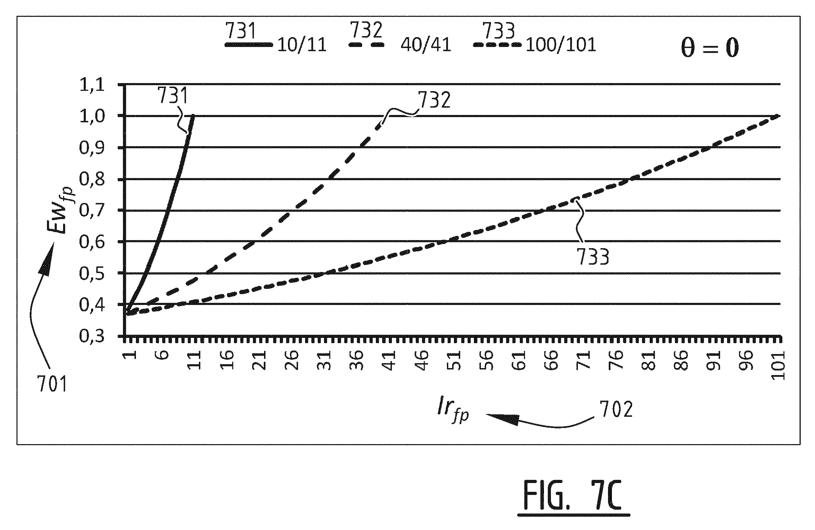

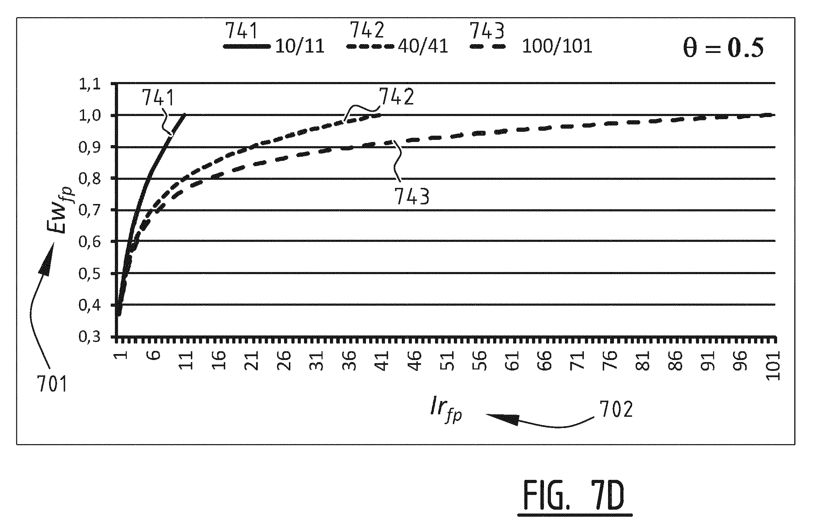

Figure 7B shows the priority weight *Ew_{fp}* for scheduling from the second or "fast path" queue 102 for packet flow ratios from 40:1 to 1:40 with a deficiency factor of 40/41 for different values of θ = *Qfⱼₚ* / *Qf_{std}*, in particular for the following values of θ: 0 (curve 721); 0,1 (curve 722); 0,3 (curve 723); 0,5 (curve 724); 1 (curve 725); and 2 (curve 726). As packet flows are switched from the first or "standard" queue 101 to the second or "fast path" queue 102, the packets from packet flow j before (i.e. under) decision threshold Q*sᵢ*, that are in the first or "standard" queue 101 should still be able to be drained with a reasonable scheduling, so that they are not excessively delayed compared to new packets from the same packet flow that may now be classified 1102 by the classifier 110 to the second or "fast path" queue 102. The importance of exponent θ is that it may regularize how much scheduling is given to the second or "fast path" queue 102 according to the ratio of the queue filling 121, 122 on both queues 101, 102. Figure 7C corresponds with Figure 7A but sets θ=0, yielding curves 731, 732 and 733 corresponding respectively with curves 711, 712 and 713. Figure 7D also corresponds with Figure 7A but sets θ = 0,5, yielding curves 741, 742 and 743 corresponding respectively with curves 711, 712 and 713.

Comparing Figures 7A, 7C and 7D, it can be seen that increasing the exponent θ 'pushes' the curves upward (that is, towards higher weight *Ew_{fp}* values) for the same ingress rates. In other words, this increase strengthens the relative influence of the second or "fast path" queue 102.

Embodiments of the present invention as described above may be advantageously applied in a context of an access network using fiber point-to-point (ptp) to provide link connectivity between RRH (Remote Radio Head) units and BBU (Baseband Unit) using CPRIoE. In the case of using a DSLAM fiber access, the Line Termination (LT) cards containing several fiber interfaces have their traffic aggregated to the Network Termination (NT) card, which then provides the uplink towards the metro edge and BBU. Such aggregation may rely on statistical multiplexing to optimize and scale the network, which is compatible with the assumptions for the mid-haul traffic, since this is foreseen to use variable bitrates. Embodiments of the present invention may be applied for example to upstream traffic flow on a DSLAM architecture, as well as downstream traffic flow. Moreover, if other equipment such as switches and/or routers are used, they are likely to face the same issues at the aggregated queue level. Thus, embodiments of the present invention may find application with other network equipment which may serve the types of traffic described hereinabove, and/or they may also be implemented on any DSCP queues that are configured for serving such traffic.

In other words, embodiments of the present invention strive to improve correct management of traffic with stringent requirements, while still striving to respect performance levels of legacy traffic, such as best effort (e.g. residential, enterprise) in a Triple Play context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

## Claims

1. A method for queueing packets in a packet-switched network, the packets belonging to a number of packet flows, the packet flows being subject to transfer delay requirements, the method comprising:
- obtaining a packet;
- identifying a packet flow associated with the obtained packet;
- obtaining transfer delay information representing transfer delay for the identified packet flow;
- determining a load indication representing at least one of a filling level and a sojourn time of a first queue of a plurality of queues comprising at least the first and a second queue both configured for buffering packets; and
- based on the obtained transfer delay information and the determined load indication, selecting a queue from the plurality of queues.

2. The method of claim 1, wherein the selecting comprises:
- comparing the determined load indication with a decision threshold representing an equivalent filling level and/or sojourn time of the first queue, the decision threshold being based on the obtained transfer delay information.

3. The method of claim 2, wherein the selecting comprises:
- selecting the first queue from the plurality of queues, if the load indication is less than the decision threshold; and
- selecting another queue from the plurality of queues than the first queue, if the load indication is greater than the decision threshold.

4. The method of claim 3, wherein the first queue is selected only on condition that the load indication is less than a hysteresis threshold representing a lower equivalent filling level and/or sojourn time of the first queue than the decision threshold.

5. The method of any one of the previous claims, comprising scheduling packets buffered in the plurality of queues using a weighted or stochastic priority scheme taking into account at least one of the following: a relation between an ingress rate of the plurality of queues and an egress rate of the plurality of queues; a relation between an ingress rate of the first queue of the plurality of queues and an ingress rate of another queue of the plurality of queues than the first queue; and a relation between the filling level and/or sojourn time of the first queue of the plurality of queues and a filling level and/or sojourn time of another queue of the plurality of queues than the first queue.

6. The method of any one of the previous claims, wherein the packets are IEEE 802.3 Ethernet packets carrying Common Public Radio Interface data.

7. A classifier for selecting a queue from a plurality of queues comprising at least a first and a second queue configured for buffering packets, the packets belonging to a number of packet flows, the packet flows being subject to transfer delay requirements, the classifier being configured for:
- obtaining a packet;
- identifying a packet flow associated with the obtained packet;
- obtaining transfer delay information representing transfer delay for the identified packet flow;
- determining a load indication representing at least one of a filling level and a sojourn time of the first queue of the plurality of queues; and
- based on the obtained transfer delay information and the determined load indication, selecting a queue from the plurality of queues.

8. The classifier of claim 7, configured for:
- comparing the determined load indication with a decision threshold representing an equivalent filling level and/or sojourn time of the first queue, the decision threshold being based on the obtained transfer delay information.

9. The classifier of claim 8, configured for:
- selecting the first queue from the plurality of queues, if the load indication is less than the decision threshold; and
- selecting another queue from the plurality of queues than the first queue, if the load indication is greater than the decision threshold.

10. The classifier of claim 8, configured for selecting the first queue only on condition that the load indication is less than a hysteresis threshold representing a lower equivalent filling level and/or sojourn time of the first queue than the decision threshold.

11. A queueing system for queueing packets in a packet-switched network, the packets belonging to a number of packet flows, the packet flows being subject to transfer delay requirements, the queueing system comprising:
- a plurality of queues comprising at least a first and a second queue both configured for buffering packets;
- a classifier according to any one of the claims 7-10; and
- a scheduler configured for scheduling packets for dispatch from the plurality of queues.

12. The queueing system of claim 11, wherein the scheduler is configured for scheduling packets buffered in the plurality of queues using a weighted or stochastic priority scheme taking into account at least one of the following: a relation between an ingress rate of the plurality of queues and an egress rate of the plurality of queues; a relation between an ingress rate of the first queue of the plurality of queues and an ingress rate of another queue of the plurality of queues than the first queue; and a relation between the filling level and/or sojourn time of the first queue of the plurality of queues and a filling level and/or sojourn time of another queue of the plurality of queues than the first queue.

13. The queueing system of any one of the claims 11-12, wherein the plurality of queues comprises exactly the first and the second queue.

14. A network element for processing packets in a packet-switched network, the packets belonging to a number of packet flows, the packet flows being subject to transfer delay requirements, the network element comprising:
- at least one queueing system according to any one of the claims 11-13;
- a main classifier configured for selecting at least one of the at least one queueing system to queue an incoming packet of the packets to be processed; and
- a main scheduler configured for scheduling processed packets from the at least one queueing system.

15. A computer program product comprising a computer-executable program of instructions for performing, when executed on a computer, the steps of the method of any one of claims 1-6.

## Amended claims

### Amended claims in accordance with Rule 137(2) EPC.

1. A method (2000) for queueing packets in a packet-switched network, the packets belonging to a number of packet flows, the packet flows being subject to transfer delay requirements, the method comprising:
- obtaining (2010) a packet; the method **characterised by**:
- identifying (2030) a packet flow associated with the obtained packet;
- obtaining (2050) transfer delay information representing transfer delay for the identified packet flow;
- determining (2070) a load indication representing at least one of a filling level and a sojourn time of a first queue of a plurality of queues comprising at least the first and a second queue both configured for buffering packets; and
- based on the obtained transfer delay information and the determined load indication, selecting (2090) a queue from the plurality of queues for buffering (2210) the obtained packet.

2. The method of claim 1, wherein the selecting comprises:
- comparing (2094) the determined load indication with a decision threshold representing an equivalent filling level and/or sojourn time of the first queue, the decision threshold being based on the obtained transfer delay information.

3. The method of claim 2, wherein the selecting comprises:
- selecting the first queue from the plurality of queues, if the load indication is less than the decision threshold; and
- selecting another queue from the plurality of queues than the first queue, if the load indication is greater than the decision threshold.

4. The method of claim 3, wherein the first queue is selected only on condition that the load indication is less than a hysteresis threshold representing a lower equivalent filling level and/or sojourn time of the first queue than the decision threshold.

5. The method of any one of the previous claims, comprising scheduling packets buffered in the plurality of queues using a weighted or stochastic priority scheme taking into account at least one of the following: a relation between an ingress rate of the plurality of queues and an egress rate of the plurality of queues; a relation between an ingress rate of the first queue of the plurality of queues and an ingress rate of another queue of the plurality of queues than the first queue; and a relation between the filling level and/or sojourn time of the first queue of the plurality of queues and a filling level and/or sojourn time of another queue of the plurality of queues than the first queue.

6. The method of any one of the previous claims, wherein the packets are IEEE 802.3 Ethernet packets carrying Common Public Radio Interface data.

7. A classifier (110) for selecting a queue from a plurality of queues comprising at least a first (101) and a second (102) queue configured for buffering packets, the packets belonging to a number of packet flows, the packet flows being subject to transfer delay requirements, the classifier being configured for:
- obtaining (2010) a packet; the classifier **characterised by** being configured for:
- identifying (2030) a packet flow associated with the obtained packet;
- obtaining (2050) transfer delay information representing transfer delay for the identified packet flow;
- determining (2070) a load indication representing at least one of a filling level and a sojourn time of the first queue of the plurality of queues; and
- based on the obtained transfer delay information and the determined load indication, selecting (2090) a queue from the plurality of queues for buffering (2210) the obtained packet.

8. The classifier of claim 7, configured for:
- comparing (2094) the determined load indication with a decision threshold representing an equivalent filling level and/or sojourn time of the first queue, the decision threshold being based on the obtained transfer delay information.

9. The classifier of claim 8, configured for:
- selecting the first queue from the plurality of queues, if the load indication is less than the decision threshold; and
- selecting another queue from the plurality of queues than the first queue, if the load indication is greater than the decision threshold.

10. The classifier of claim 8, configured for selecting the first queue only on condition that the load indication is less than a hysteresis threshold representing a lower equivalent filling level and/or sojourn time of the first queue than the decision threshold.

11. A queueing system for queueing packets in a packet-switched network, the packets belonging to a number of packet flows, the packet flows being subject to transfer delay requirements, the queueing system comprising:
- a plurality of queues comprising at least a first (101) and a second (102) queue both configured for buffering packets;
- a classifier (110) according to any one of the claims 7-10; and
- a scheduler (120) configured for scheduling (1201) packets for dispatch (1202) from the plurality of queues.

12. The queueing system of claim 11, wherein the scheduler is configured for scheduling packets buffered in the plurality of queues using a weighted or stochastic priority scheme taking into account at least one of the following: a relation between an ingress rate of the plurality of queues and an egress rate of the plurality of queues; a relation between an ingress rate of the first queue of the plurality of queues and an ingress rate of another queue of the plurality of queues than the first queue; and a relation between the filling level and/or sojourn time of the first queue of the plurality of queues and a filling level and/or sojourn time of another queue of the plurality of queues than the first queue.

13. The queueing system of any one of the claims 11-12, wherein the plurality of queues comprises exactly the first (101) and the second (102) queue.

14. A network element for processing packets in a packet-switched network, the packets belonging to a number of packet flows, the packet flows being subject to transfer delay requirements, the network element comprising:
- at least one queueing system according to any one of the claims 11-13;
- a main classifier configured for selecting at least one of the at least one queueing system to queue an incoming packet of the packets to be processed; and
- a main scheduler configured for scheduling processed packets from the at least one queueing system.

15. A computer program product comprising a computer-executable program of instructions for performing, when executed on a computer, the steps of the method of any one of claims 1-6.
